# EUROPEAN PATENT APPLICATION

(11) **EP 2 117 144 A1**
(43) Date of publication of application: **11.11.2009**
(21) Application number: 08155941.1
(22) Date of filing: 09.05.2008
(51) Int. Cl.: H04J 3/06, B66B 1/34, H04L 12/417

(54) **A master-less time division multiplexing method for communicating safety states**

(71) Applicant: Inventio AG, 6052 Hergiswil (CH)
(72) Inventor: Roussel, Frank Olivier, 6600 Muralto (CH)
(74) Representative: Blöchle, Hans

(57) **Abstract**

A master-less time division multiplexing method for communicating safety states between a plurality of nodes (12) connected by a single-line safety bus (10), wherein each node (12) has a transmitting and receiving means (14, 16) and a timer, and the safety states are transmitted on the basis of a recessive / dominant bit representation, wherein all nodes (12) transmit at the same time the nodes transmitting outside their allocated slots only transmitting recessive state bits, comprises the steps of: assigning transmission time slots uniquely to each of the nodes; synchronizing all nodes using the start bit of the data frame of each of the nodes, wherein the timer of each node is triggered by the detection of the start of a start bit of a data frame on the bus; detecting a collision on the safety bus and/or a hardware problem once the nodes are synchronized; and each node immediately stopping emitting in case of a detection of a collision on the bus or a hardware problem, respectively.

## Description

The present invention relates to a master-less time division multiplexing method for communicating safety states between a plurality of nodes connected by a single-line safety bus.

Conventional elevator safety systems use a so-called safety chain which is a serial circuit comprised of switches and contacts. The switches and contacts are operated by safety devices of the elevator system such as the overspeed governor and the limit switch of the car and the switches and locks of the landing doors. The safety chain operates relays that handle power to the motor and the brake of the elevator. A safety operation of any contact within the serial circuit will disconnect the motor or drive from the main power supply to stop the car.

In recent years, the safety chain formed by a serial circuit of switches and contacts has been replaced by a safety chain comprising a safety bus connecting a plurality of bus nodes to an electronic safety controller. Each of the bus nodes receives data from a sensor detecting a safety condition of the elevator system. On the basis of the condition signals received via the safety bus the controller controls the drive and brake system of the elevator. Such an electronic safety system for an elevator is disclosed e.g. in US 6,173,814 B1.

In an elevator system, two main zones have to be considered: the car and the shaft. Some of the safety devices are located in the shaft only, some in the car only, and some span both. Therefore, the safety chain of an elevator comprises a safety bus spanning the car and the shaft over the travelling cable connected to the car. To simplify the architecture of the travelling cable concerning the transmission of safety signals between the car and the shaft, the travelling cable may include only a single-line safety bus and the safety signals may be transmitted in a time division multiplexed manner.

If multiple transceivers, however, attempt to use a medium simultaneously, the transmissions collide, resulting in garbled messages and potentially lost data. Therefore, Media Access Control (MAC) protocols are used to arbitrate which transceiver has possession of a medium at any given time. Further, in many communication systems there is a need to occasionally resynchronize all transceivers to a common point in time. Perhaps the most straightforward communication scheme is synchronous Time Division Multiplexing (TDM). In the traditional master/slave implementation, a single transceiver is designated as the bus master and this bus master queries each transceiver in turn, allowing each transceiver to transmit a message when queried.

To avoid the high overhead because of the need for a bus master and the query messages and responses on the bus, there are also known synchronous master-less time division multiplexing methods for communicating between a plurality of transceivers interconnected by a single-line communication medium. In such master-less TDM methods, however, a means for collision detection on the bus is required which may use e.g. a so-called jam signal.

Furthermore, U.S. patents No. 5,450,404, 5,436,901, and 5,535,212 provide a synchronous master-less time division multiplexing method for communicating between a plurality of transceivers interconnected by a single-line communication medium using the above-mentioned jam signals for synchronization.

It is an object of the present invention to improve the a master-less time division multiplexing method for communicating safety states between a plurality of nodes connected by a single-line safety bus.

According to a first aspect of the invention, this object is achieved by providing a master-less time division multiplexing method for communicating safety states between a plurality of nodes connected by a single-line safety bus, showing the features of claim 1. Further developments and advantageous embodiments are defined in the dependent claims.

The master-less time division multiplexing method for communicating safety states between a plurality of nodes connected by a single-line safety bus, wherein each node has a transmitting and receiving means and a timer, and the safety states are transmitted on the basis of a recessive/dominant bit representation, wherein all nodes transmit at the same time the nodes transmitting outside their allocated slots only transmitting recessive state bits, comprises the steps of: assigning transmission time slots uniquely to each of the nodes; synchronizing all nodes using the start bit of the data frame of each of the nodes, wherein the timer of each node is triggered by the detection of the start of a start bit of a data frame on the bus; detecting a collision on the safety bus and/or a hardware problem once the nodes are synchronized; and each node immediately stopping emitting in case of a detection of a collision on the bus or a hardware problem, respectively.

In a preferred embodiment, for detecting a collision on the safety bus and/or a hardware problem, the nodes emit a data frame and concurrently read the actual data frame on the bus. A collision on the bus may be detected in case of detecting a dominant safety state when expecting a recessive safety state, in the detecting step, and a hardware problem may be detected in case of detecting a recessive safety state when expecting a dominant safety state, in the detecting step.

According to a second aspect of the invention, the above-mentioned object is achieved by providing a master-less time division multiplexing method for communicating safety states between a plurality of nodes connected by a single-line safety bus, showing the features of claim 5. Further developments and advantageous embodiments are defined in the dependent claims.

The master-less time division multiplexing method for communicating safety states between a plurality of nodes connected by a single-line safety bus, wherein each node has a transmitting and receiving means and a timer, and the safety states are transmitted on the basis of a recessive/dominant bit representation, wherein all nodes transmit at the same time the nodes transmitting outside their allocated slots only transmitting recessive state bits, comprises the steps of: assigning transmission time slots uniquely to each of the nodes; synchronizing all nodes; detecting a collision on the safety bus and/or a hardware problem once the nodes are synchronized by emitting a data frame and concurrently reading the actual data frame on the bus; and each node immediately stopping emitting in case of a detection of a collision on the bus or a hardware problem, respectively.

In a preferred embodiment, a collision on the bus may be detected in case of detecting a dominant safety state when expecting a recessive safety state, in the detecting step, and a hardware problem may be detected in case of detecting a recessive safety state when expecting a dominant safety state, in the detecting step.

In another preferred embodiment, the start bit of the data frame of each of the nodes is used for synchronizing all nodes, and the timer of each node is triggered by the detection of the start of a start bit of a data frame on the bus.

Further, the data frame preferably uses the UART format.

Furthermore, each node may be allocated a unique identifier allowing to decide in which time slot the respective producer nodes send data and receive the data and in which order the nodes initiate bus communication.

To achieve a more robust and more secure system, the method preferably uses at least one of the following filtering mechanisms. First, each node switches from a safe state to a potentially dangerous state only after receiving a predefined number of identical data frames, in case the node is synchronized with the safety bus. Second, each node switches from a potentially dangerous state to a safe state only after a predefined delay, in case the node looses its synchronization with the safety bus.

To provide a more complete understanding of the present invention, and for further objects, features and advantages thereof, reference is now made to the following description taken in conjunction with the accompanying drawing, in which:
- Figure 1: is a simplified block diagram showing the interconnection between a node and the bus;
- Figure 2: is a schematic diagram showing the structure of one byte in the UART format;
- Figure 3: is a truth table showing the states of the node and the bus as well as the corresponding detection results;
- Figure 4: is a simplified block diagram of a node according to first preferred embodiment of the present invention;
- Figure 5: is a simplified block diagram of a node according to second preferred embodiment of the present invention;
- Figure 6: is a schematic time table showing the synchronization mechanism of the present invention;
- Figure 7: is a flow chart showing the behaviour of a node according to a fist example of the present invention;
- Figure 8: is a schematic view showing the overall frame structure according to the present invention;
- Figure 9: is a flow chart showing the behaviour of a node according to a second example of the present invention; and
- Figure 10: is a schematic diagram illustrating a modification of the synchronization mechanism of the present invention.

In the following, a master-less pseudo-synchronous time division multiplexing method is described with reference to the accompanying drawings. Especially, the master-less time division multiplexing method for communicating safety states between a plurality of nodes connected by a single-line safety bus may advantageously be used for a safety chain of an electronic safety system for elevators having a safety bus spanning the car and the shaft over the travelling cable connected to the car.

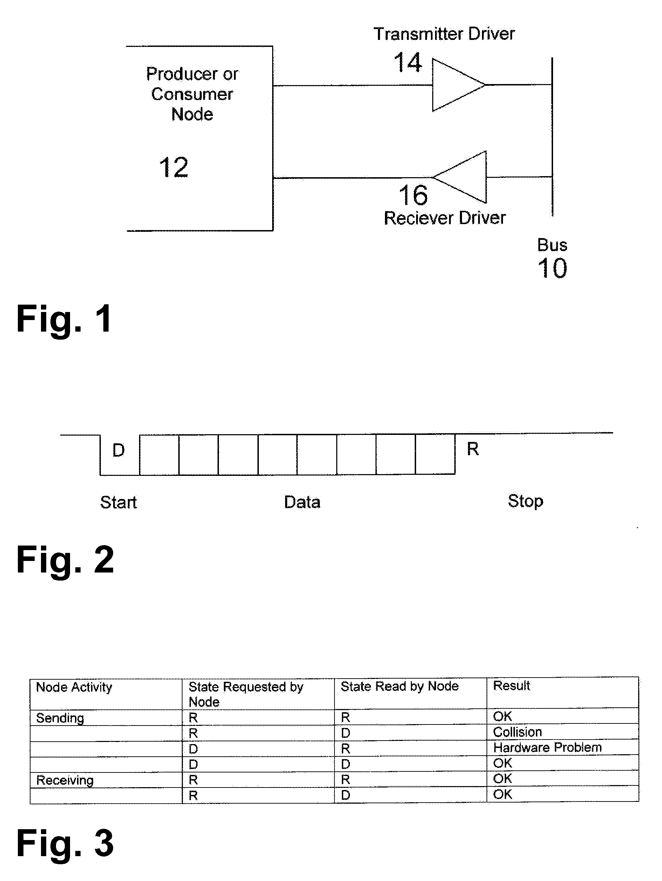

The method is based on a recessive / dominant bit representation transmitting information associated with a safe or unsafe state. To define the behaviour of the bus the following terms are used in this description as shown in Figure 1. A node 12 is an element connected to the bus 10, a receiver driver (receiving means) 16 is an element of a node 12 allowing to capture the state of the bus 10, a transmitter driver (transmitting means) 14 is an element of a node 12 allowing to force the bus 10 into its dominant state, a producer node is a node 12 producing information that is transmitted on the bus 10, and a consumer node is a node 12 receiving information from the bus 10. It is to be noted that a producer node or a consumer node both have a receiver driver 16 and a transmitter driver 14. The transmitting and receiving means 14, 16 may be implemented on the same integrated circuit (IC).

There are a lot of possible implementations that allow dominant / recessive states on the bus 10 known to the person skilled in the art. One of them is the Controller Area Network (CAN) bus, another example is the Biobus of the Applicant. The CAN bus physical layer allows the choice of drivers from various manufacturers and the bus behaviour and timing are well defined.

On the bus 10, each node 12 sends out the recessive or dominant state, and also reads the bus state at the same time. Therefore, the node 12 knows if the bus state request has been successful or not.

As the safety bus has only one line it cannot be synchronous to a single clock. Actually, synchronicity to a single clock is not desired as the clock would then become a single point failure. In the inventive concept, the only possible single point failure should be the physical medium of the safety bus. This means that each node has a local clock / timer, and that a synchronization mechanism exists between them.

Furthermore, to allow implementation with currently available components, preferably a deliberately simple implementation is chosen, even if this means handling inefficiencies at a higher protocol level. The idea of the present invention is to use Universal Asynchronous Receiver Transmitter (UART) or a similar system to generate a pseudo-synchronous protocol.

A standard UART byte, as shown in Figure 2, consists of one start bit, eight data bits and one or more stop bits. In the current method, the start bit should be a dominant bit and the stop bit should be a recessive bit. In general, the present invention includes embodiments comprising a byte having a predetermined number (≥ 1) of start bits, a predetermined number (e.g. 8) of data bits, and a predetermined number (≥ 1) of stop bits.

The scheme applied is designed to avoid collisions on the bus once the nodes are synchronized. When a node emits a byte explained above, the node concurrently listens to the bus and stops emitting immediately when a collision is detected. In case a recessive state is requested and a dominant state is received instead, a collision is detected. In the opposite case, however, an error condition, i.e. a hardware problem, on the driver or on the bus is detected. The exemplary truth table for a node is shown in Figure 3.

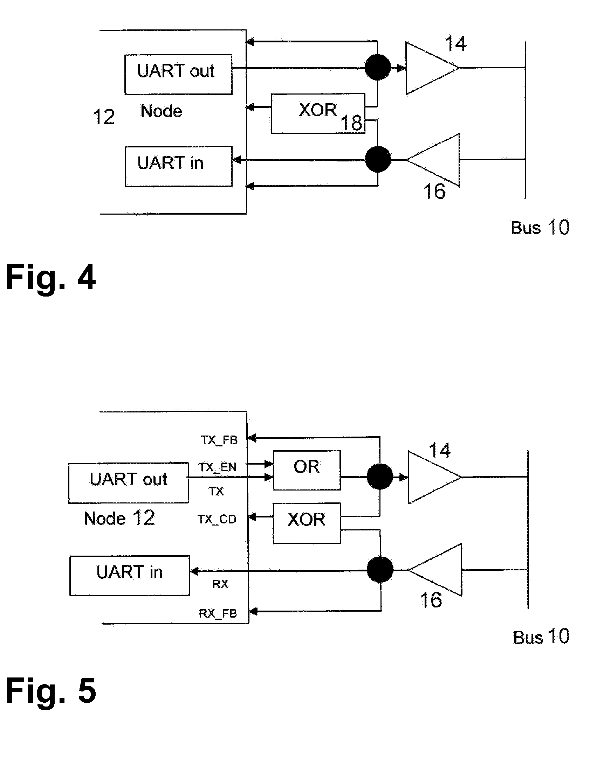

To implement the above-discussed collision detection, the node 12 has an exclusive OR function 18 to detect collisions or hardware issues. Further, the UART emitting and receiving channels might not necessarily be on the same pins as general inputs, as shown e.g. in Figure 4. An additional feedback is provided from the pins of the UART emitting and receiving channels to the node as the actual hardware may not allow to read the UART pins directly.

Indeed, the general low-cost hardware used for UART transmission may not even have a way to stop the transmission of the byte once it has started. Therefore, in a further embodiment, the node may be complemented as shown in Figure 5. The receiver UART and the transmitter UART can actually operate independently from each other, i.e. the receiver UART is not used to check bit-wise collision. The receiving and transmitting means 14, 16 of the node 12 use the following signals:
- TX: output of the UART shift register
- TX_EN: enables the state to be requested on the bus
- TX_FB: feedback of the requested state
- RX_CD: collision or hardware failure detection
- RX: input of the UART shift register
- RX_FB: feedback of the bus state

The synchronization of the bit may be made in the usual UART way, i.e. by sampling every bit after having detected the falling edge of the start bit, waiting 0.5 bit time to check the start bit and sampling after waiting 1 bit time for every bit.

In a standard collision avoidance scheme, each node transmits only in its own dedicated time slot. For this, the transmitter starts to transmit concomitantly with a master clock, after having waited for its turn. But with low-cost systems, the clocks are not very precise and waiting for its own turn would degrade performance unacceptably. To avoid this issue, according to the present invention, the following mechanism is used to synchronize the bus at each transmitted byte.

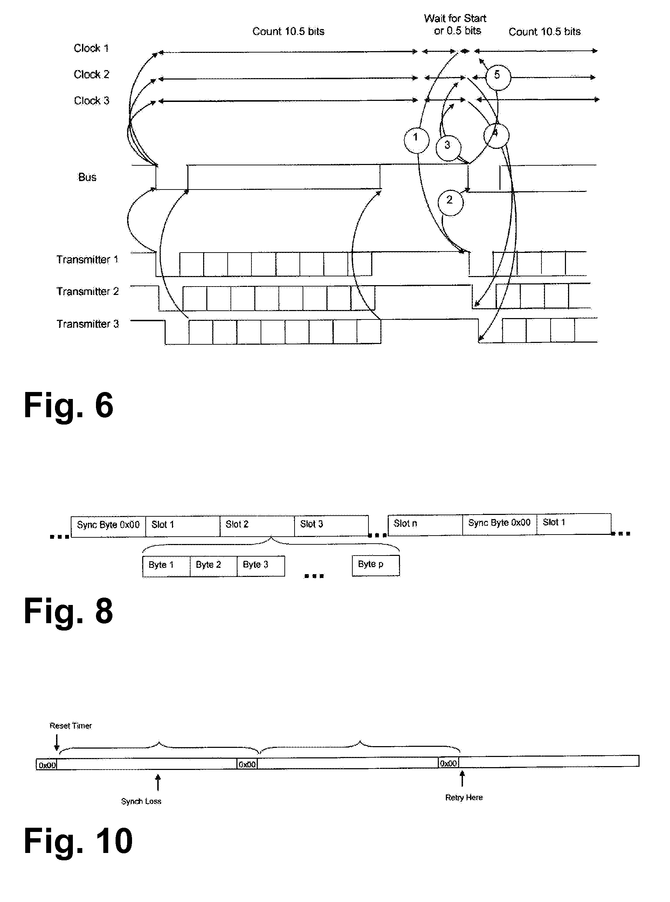

The present invention takes advantage of the recessive / dominant states of the bus. As schematically shown in Figure 6, all nodes always transmit at the same time. The start and stop bits are used for synchronization and the nodes transmitting outside their allocated slots only transmit recessive state bits. The considered frame structure is 1 start bit, 8 data bits, and 1 stop bit, i.e. 10 bits in total, as shown in Figure 2.

When the transmitter of a node starts to send, it sets a timer counting 11 bits. The timer, instead of being triggered by the start of the transmission by the node, is triggered by the detection of the start of the start bit on the bus, i.e. by detecting the falling edge of the RX_FB signal. This ensures that all timers of all nodes will start at the same time, assuming the nodes all have the same reaction time. The timer then counts at least until 10.5 bits, from where on the bus is again monitored for the start of the start bit.

Then, the transmitter of the node starts again a data frame when the counter has counted until 11 bits or when a start bit has been detected, whichever comes first. Thus, each cycle of the pseudo-master clock is determined by the fastest node at that moment. The inventive system guarantees that all nodes have at least the first half of the eleventh bit to reload the UART and the second half of the eleventh bit to synchronize with the other nodes. The person skilled in the art will of course recognize that the present invention is not limited to the mentioned numbers of bits of the data frame structure.

Referring now to Figure 6 in more detail, at (1), the first node that reached counting to 11 bits triggers the start of the next byte transmission. The start bit of the next byte is then transmitted on the bus (2). This leads to the other nodes sensing the start bit on the bus (3) and triggering the transmission of the next data frame (4). In the meantime, the quickest transmitter waits and starts the next counter cycle at the same time as the others (5).

An error on the bus or a bad synchronization might cause the byte structure discussed above to be disrupted which can be detected.

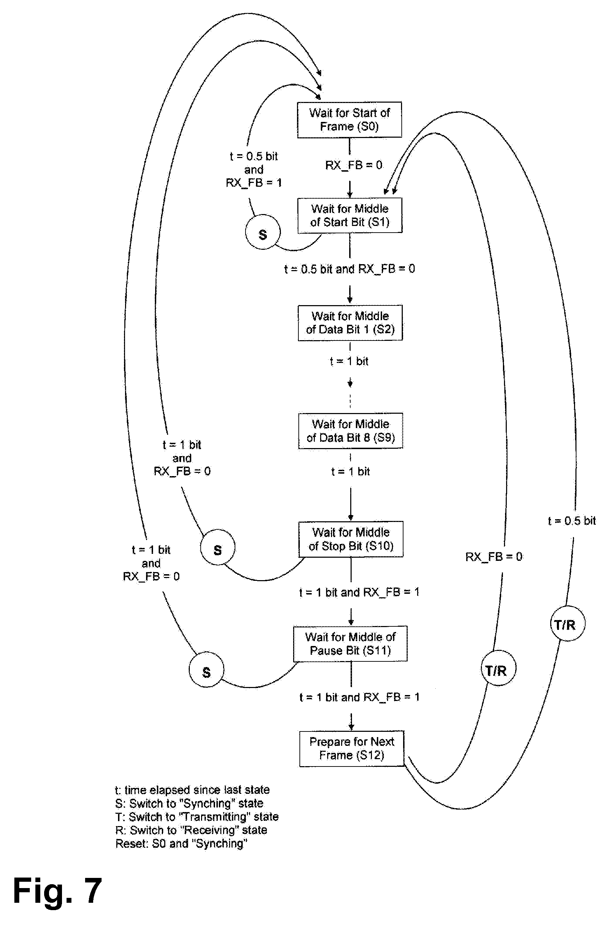

Thus, two different primary node states can be defined, one where the node is synchronizing (S) and one where it has been synchronized and is now transmitting the produced data (T) or receiving the produced data (R). This is shown in more details in Figure 7.

In step S0, the node waits for the start of a data frame; the RX_FB signal has the value "0". In step S1, the node waits for the middle of a start bit in the bus. If no start bit has been detected on the bus, the node switches to the synchronization (S), increases the timer by 0.5 bits, sets the value of the RX_FB signal to "1" and goes back to step S0. In case of detecting a start bit on the bus, the RX_FB signal is held on "0", and the procedure goes on to step S2 to wait for data bit 1.

In steps S3 through S9 all further data bits 2 to 8 are read. In step S10, the node detects the stop bit on the bus, and switches to the synchronization state (S) again. Afterwards, it waits for the pause bit (step S11, timer counts 10.5 bits) and remains in the synchronization state (S). Then, in step S12, the node prepares for the next data frame and goes back to step S1 to wait for the start of a start bit on the bus again.

A byte is successfully read if step S12 is reached, and a byte is transmitted when exiting step S12.

The overall frame structure used for the inventive method described above is shown in Figure 8.

The nodes can identify the content of a produced or consumed byte thanks to its position with respect to a synchronization byte. This synchronization byte has been chosen to 0x00 as it is the byte with the top-most priority in a recessive / dominant scheme. Therefore, any node transmitting the synchronization byte on the bus will force all other nodes to interpret the currently received byte as the start of the data frame. It is to be noted that this implies that the nodes are already synchronized at bit level, using the mechanism described above.

Therefore, the transmitter and the receiver of the node preferably implement a frame counter that allows them to count the frames after the synchronization byte. The details of the actual number of slots, the number of bytes per slot or the interleaving of data are implementation dependent. The synchronization byte is the means to reset the frame counter. The nodes which are either transmitting or receiving (i.e. successfully passed step S12 of Figure 7) also reset their frame counters once they count the predefined frame length.

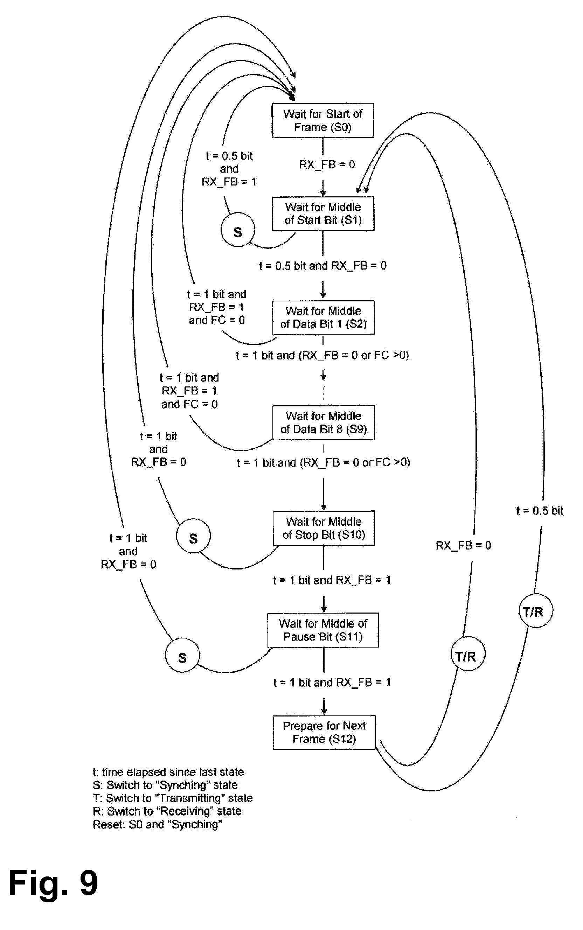

Reference is now made to Figure 9 showing another example of the transmitting and receiving method of the invention in a way similar to Figure 7.

In the bit synchronization mechanism described before, a node might misinterpret a falling edge in the middle of a byte sent by another node as a start bit on the bus. To avoid this happening, a switch from the synchronizing state (S) to the transmitting (T) or receiving (R) state is only allowed upon receipt of the synchronization byte. After detection of the start bit, the eight data bits are being checked for being 0, meaning that a misinterpreted start bit which would happen to be within a byte sent by another node will immediately be discarded when the stop bit is read.

As explained above, at least one node of the safety chain has to start the synchronization mechanism and keep it going. Any node connected to the bus could be given this task. In the inventive implementation, however, the choice has been made to confer this task to the consumer nodes, thereby reducing the producer node complexity. This is advantageous as the bus does not need to be kept alive upon failure of all consumer nodes.

Furthermore, the nodes must know in which time slot of the time division multiplex they are to send or receive the data. For this reason, each node is allocated a unique identifier (ID) allowing to decide (i) in which time slot the producer nodes send data and the consumer nodes receive the data, and (ii) in which order the consumer nodes initiate bus communication.

In a preferred embodiment, this identifier can be defined on the support hardware of the node, and not on the node itself, thereby ensuring that when the node hardware is exchanged, the identifier remains the same.

If no communication is active on the bus, or if all nodes have just lost synchronization with the bus, the first synchronization byte has to be forced onto the bus by at least one node. The mechanism described below allows ensuring that only one node tries to do so, therefore avoiding collisions of the first synchronization byte.

The node uses its identifier to define how long it will wait before forcing a synchronization byte onto the bus if the bus is idle. The node will send out a 0x00 synchronization byte if it has been in the synchronizing state for more than a full frame period, but will force the synchronization byte in the same frame rhythm that was previously held. A kick-off timer is implemented which is being reset at power-up or at the beginning of each valid frame. The timer then counts a delay equal to the length of a frame multiplied by its identifier +2, as illustrated in Figure 10.

This mechanism allows accounting for two characteristics of the bus: If a node switched to the synchronization state but there are other nodes still active and in synchronization, the node just waits for the next synchronization byte to start its own bus activity. If all nodes switched to the synchronization state, it is likely that they do not loose their synchronization at the same time. Starting the counter from the last time where all nodes were synchronized ensures that no unwanted collisions of forced synchronization bytes occur. Thus, this mechanism allows for a very quick bus recovery without race conditions.

To make the inventive system both more robust and more secure, two filtering mechanisms are used.

First, in case the consumer node looses its synchronization with the bus, it does not switch immediately from the potentially dangerous state (i.e. safety circuit closed) to the safe state (i.e. safety circuit open), but does so after a predefined delay. This allows the system to tolerate short bus failures, within a time considered to be safe, to allow the system to be used in noisier environments. This delay is typically equivalent to a fraction of the maximum reaction time of the safety circuit.

Second, once the node is synchronized with the bus, a switch from the safe state to the potentially dangerous state is not executed immediately, but only after sufficient identical frames to ensure the required safety integrity level. On the other hand, a request to switch to the safe state is executed immediately.

To conclude, the method of the present invention shows a robust behaviour if one of the consumer or producer nodes fails, and can therefore be used in situations where redundancy is used to guarantee safety. Furthermore, its deterministic nature allows controlling the reaction time very precisely, the maximum reaction time of the system being independent of the failure mode. This makes it easier to prove safety concepts, rather than with asynchronous systems which have to handle bus contention issues.

The master-less time division multiplexing method for communicating safety states between a plurality of nodes connected by a single-line safety bus may advantageously used in an electronic safety system for elevators, especially for the safety bus formed by a twisted pair in the travelling cable connected to the elevator car.

Some of the main characteristics of the master-less time division multiplexing method for communicating safety states between a plurality of nodes connected by a single-line safety bus according to the present invention are:
- it allows the multiplexing of the safety information data
- it is deterministic allowing reaction time prediction
- the hardware medium is the only single point failure
- the safety bus can be built using existing low-cost components that are manufacturer independent
- it does not rely on a vendor dependent proprietary solution
- it results in a cost advantage if the safety bus length is increased
- it allows the elevator controller full access to the transmitted information without interfering with the safety aspects of the bus
- it ensures reliable communication without interruption.

Finally, evaluating the reliability of the above explained method of the present invention for an electronic safety system for elevators led to the following results.

For a frame to be accepted, all bytes must be accepted, i.e. the start bit and the stop bit(s) of each byte must be detected correctly, and the first byte must be 0x00. Assuming the probability of a recessive bit being sampled as a dominant bit as µ=0.001, the probability of a dominant bit being sampled as a recessive bit as v=0.0001, and the number of bytes needed to define the safety circuit states as s=1, then the probability of a data frame being accepted may be calculated to p_{acc}=0.99. The probability of loosing synchronization during one frame period is 1-p_{acc}.

Further, if a frame is rejected, the consumer node looses its synchronization with the bus and waits for a defined delay before switching to its safe state, if it has not re-synched before. This delay can be expressed as a multiple m of the data frame duration. To reach the required elevator availability that multiple m should be 6, for example.

Furthermore, for a potentially dangerous state to occur, two conditions must be met: (i) the consumer node must be in the synchronized state, otherwise it would force the safe state after the predefined delay, and (ii) the perturbation must defeat the triple voting error correction mechanism. On that basis, a probability of a data frame being accepted and being potentially dangerous may be calculated to a very small value of 0.000024, for example.

A still further approximation may be performed regarding the probability of having no potentially dangerous state occurring within one hour. That probability may be calculated as 1-p_{SIL} wherein p_{SIL}<10⁻⁷, in case of the inventive bus.

In addition, filtering reduces the reaction time, and the reaction time should remain within reasonable boundaries for the system to ensure proper safety. Although the elevator standards do not define any required reaction time, the present invention achieves acceptable reaction times of 5 ms or less.

## Claims

1. A master-less time division multiplexing method for communicating safety states between a plurality of nodes connected by a single-line safety bus, wherein each node has a transmitting and receiving means and a timer, and the safety states are transmitted on the basis of a recessive/dominant bit representation, wherein all nodes transmit at the same time the nodes transmitting outside their allocated slots only transmitting recessive state bits, comprising the steps of:
- assigning transmission time slots uniquely to each of the nodes;
- synchronizing all nodes using the start bit of the data frame of each of the nodes, wherein the timer of each node is triggered by the detection of the start of a start bit of a data frame on the bus;
- detecting a collision on the safety bus and/or a hardware problem once the nodes are synchronized; and
- each node immediately stopping emitting in case of a detection of a collision on the bus or a hardware problem, respectively.

2. The method according to claim 1, wherein
for detecting a collision on the safety bus and/or a hardware problem, the nodes emit a data frame and concurrently read the actual data frame on the bus.

3. The method according to claim 2, wherein
a collision on the bus is detected in case of detecting a dominant safety state when expecting a recessive safety state, in the detecting step.

4. The method according to claim 2 or 3, wherein
a hardware problem is detected in case of detecting a recessive safety state when expecting a dominant safety state, in the detecting step.

5. A master-less time division multiplexing method for communicating safety states between a plurality of nodes connected by a single-line safety bus, wherein each node has a transmitting and receiving means and a timer, and the safety states are transmitted on the basis of a recessive/dominant bit representation, wherein all nodes transmit at the same time the nodes transmitting outside their allocated slots only transmitting recessive state bits, comprising the steps of:
- assigning transmission time slots uniquely to each of the nodes;
- synchronizing all nodes;
- detecting a collision on the safety bus and/or a hardware problem once the nodes are synchronized by emitting a data frame and concurrently reading the actual data frame on the bus; and
- each node immediately stopping emitting in case of a detection of a collision on the bus or a hardware problem, respectively.

6. The method according to claim 5, wherein
a collision on the bus is detected in case of detecting a dominant safety state when expecting a recessive safety state, in the detecting step.

7. The method according to claim 5 or 6, wherein
a hardware problem is detected in case of detecting a recessive safety state when expecting a dominant safety state, in the detecting step.

8. The method according to any one of claims 5 to 7, wherein
the start bit of the data frame of each of the nodes is used for synchronizing all nodes.

9. The method according to claim 8, wherein
the timer of each node is triggered by the detection of the start of a start bit of a data frame on the bus.

10. The method according to any one of preceding claims, wherein
the data frame uses the UART format.

11. The method according to any one of preceding claims, wherein
each node is allocated a unique identifier allowing to decide in which time slot the respective producer nodes send data and receive the data and in which order the nodes initiate bus communication.

12. The method according to any one of preceding claims, wherein
each node switches from a safe state to a potentially dangerous state only after receiving a predefined number of identical data frames, in case the node is synchronized with the safety bus.

13. The method according to any one of preceding claims, wherein
each node switches from a potentially dangerous state to a safe state only after a predefined delay, in case the node looses its synchronization with the safety bus.
